## Europäisches Patentamt

## European Patent Office

## Office européen des brevets

(19)

(11) Veröffentlichungsnummer: **0 158 126**
**B1**

(12)

# EUROPÄISCHE PATENTSCHRIFT

(45) Veröffentlichungstag der Patentschrift:
**14.09.88**

(51) Int. Cl.⁴: **F 16 H 41/06,** F 16 D 33/02, F 01 D 17/10, F 02 B 37/12

(21) Anmeldenummer: **85102654.2**

(22) Anmeldetag: **08.03.85**

(54) **Strömungsmaschine und Verfahren zu ihrer Steuerung.**

(30) Priorität: **17.03.84 DE 3409934**
**17.04.84 DE 3414490**

(43) Veröffentlichungstag der Anmeldung:
**16.10.85 Patentblatt 85/42**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**AT - A - 358 335**
**CH - A - 323 700**
**DE - A - 2 900 289**
**DE - A - 3 012 388**
**DE - A - 3 101 131**
**FR - A - 901 125**
**FR - A - 935 340**
**GB - A - 2 009 854**
**GB - A - 2 059 515**
**US - A - 3 220 187**

(73) Patentinhaber: **Graf von Ingelheim, Peter,**
**Sillertshausen 35, D-8309 Au l.d. Hallertau (DE)**

(72) Erfinder: **Graf von Ingelheim, Peter, Sillertshausen 35,**
**D-8309 Au l.d. Hallertau (DE)**

(74) Vertreter: **Strehl, Schübel-Hopf, Groening, Schulz,**
**Widenmayerstrasse 17 Postfach 22 03 45,**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Eine Strömungsmaschine gemäß dem ersten Teil des Patentanspruchs 1 ist aus GB-A-2 009 854 bekannt. Bei der dort offenbarten Turbine wird ein Teil der eine Kompressorzwischenstufe durchströmenden Luft über eine Bypass-Einrichtung zum Turbineneinlaß zurückgeführt, um die Einströmverhältnisse zu verbessern. Die Menge der über die Bypass-Einrichtung zurückgeführten Luftströmung läßt sich durch ein Ventil verändern.

Ein grundsätzliches Problem von Strömungsmaschinen, wie Pumpen, Turbinen und hydrodynamischen Getrieben, liegt in ihrem ungünstigen Verhalten bei einer Abweichung vom Auslegpunkt und ihrer daraus resultierenden schlechten Steuerbarkeit. Der Auslegpunkt, d.h. der optimale Arbeitspunkt, ist im Kennlinienfeld von Strömungsmaschinen, den sogenannten Drosselkurven, durch bestimmte Werte des Drucks bzw. der Förderhöhe, der Durchflußmenge und der Drehzahl festgelegt. Ein Abweichen auch nur einer dieser Größen vom Auslegpunkt kann die Arbeitscharakteristik der Maschine völlig verändern.

Zur Verdeutlichung wird im folgenden beispielhaft die Wirkungsweise einer Kreiselpumpe erläutert, die bei der Leistung $P_0$ die Drehzahl $n_0$ hat. Die Drosselkurve dieser Pumpe zeigt bei dieser als konstant angenommenen Drehzahl $n_0$ ein ausgeprägtes Maximum, das durch die Koordinaten $H_{opt} =$ optimaler Förderdruck und $V_{opt} =$ optimale Fördermenge festgelegt ist und den optimalen Arbeitspunkt angibt. Auf diesem Arbeitspunkt arbeitet die Maschine mit dem maximalen Wirkungsgrad $n_{max}$, während ein Abweichen vom Arbeitspunkt zu einem starken Abfallen des Wirkungsgrads führt. Dadurch ist es schwierig, die Pumpe bei unterschiedlichen Betriebsverhältnissen mit hohem Wirkungsgrad $\eta$ zu betreiben.

Eine Verringerung des Pumpendurchsatzes durch ein Abdrosseln der Pumpe führt grundsätzlich bei sinkendem Drehmoment und geringerem Energieverbrauch zu einer Erhöhung des Förderdrucks, der in der Praxis jedoch nach oben begrenzt ist. Bei einer konventionellen Drossel am Pumpenauslaß wird der erhöhte Förderdruck abgebaut, indem die entstehende potentielle Energie in Wärme umgewandelt wird, womit sie ungenutzt verlorengeht. Andererseits ist bei einer als ideal betrachteten Maschine bei konstanter Leistung P die Fördermenge V umgekehrt proportional zum Förderdruck H, d.h. die Fördermenge V nimmt mi fallendem Förderdruck H zu. Bei einer realen Pumpe steigen jedoch mit der Erhöhung der Fördermenge V die Strömungsgeschwindigkeit und in quadratischer Abhängigkeit von der Strömungsgeschwindigkeit im Rotor die Strömungsverluste. Daher ergibt sich nur in einem Punkt der Drosselkurve ein Wirkungsgrad-Maximum.

Ähnliche Zusammenhänge ergeben sich auch für Turbinen und hydrodynamische Getriebe, sogenannte Föttinger-Getriebe, die im wesentlichen aus einer mit einer Flüssigkeitsturbine kombinierten Kreiselpumpe aufgebaut sind. Derartige Strömungsgetriebe finden als hydrodynamische Kupplungen und bei Einbau eines zusätzlichen Reaktionsglieds als hydrodynamische Wandler im Maschinenbau, insbesondere in Form von Automatikgetrieben für Kraftfahrzeuge, in großem Umfang Anwendung.

Angesichts des Standes der Technik liegt die Aufgabe der Erfindung darin, eine Strömungsmaschine, beispielsweise eine Pumpe, eine Turbine oder ein Strömungsgetriebe anzugeben, die mit einem relativ unkomplizierten und kompakten und damit kostengünstigen Aufbau, insbesondere ohne Zuführung von Fluid aus externen Druckbehältern, bei wechselnden Lastverhältnissen durch Steuerung der Durchsatzparameter des Fluidstroms im optimalen Arbeitspunkt, d.h. mit einem hohen Wirkungsgrad betrieben werden kann.

Die Lösung dieser Aufgabe erfolgt mit der im Patentanspruch 1 gekennzeichneten Strömungsmaschine. Danach dient die Injektoreinrichtung dazu, bei der Zusammenführung der beiden Strömungskomponenten diejenige mit dem höheren spezifischen Energieinhalt unter Drosselung der von ihr durchströmten Querschnittsfläche als Treibströmung zum Ansaugen der anderen Strömungskomponente einzusetzen. Der durch die Bypass-Einrichtung zurückgeführte Strömungsanteil, der für den Betrieb an dem jeweiligen Arbeitspunkt nicht erforderlich ist, wird auf diese Weise zur Erhöhung des Wirkungsgrades an diesem Arbeitspunkt ausgenutzt.

Unter dem im Anspruch 1 verwendeten Ausdruck «spezifischer Energieinhalt» ist die auf die Fluidmenge normierte potentielle oder kinetische Energie des Fluids zu verstehen.

Bevorzugte Ausführungsformen und Weiterbildungen der Erfindung, insbesondere die Anwendung auf eine Pumpe, eine Turbine oder ein hydrodynamisches Getriebe, sind in den Unteransprüchen angegeben.

Die Patentansprüche 20 bis 22 sind auf Verfahren gerichtet, mit denen eine optimale Steuerung des Anfahr-, Brems- und Leerlaufbetriebs eines erfindungsgemäß aufgebauten Strömungsgetriebes möglich ist.

Ähnliche Steuerverfahren sind aus US-A-3 220 187 und CH-A-323 700 bekannt. Die in diesen Druckschriften beschriebenen Drehmomentwandler weisen aber keine Injektoreinrichtungen auf, bei denen eine der beiden am Injektor zusammengeführten Strömungskomponenten zum Ansaugen der anderen Strömungskomponente eingesetzt wird. Das Erfindungsprinzip des Patentanspruchs 1 ist somit auch bei diesen bekannten Verfahren nicht angewandt.

Bevorzugte Ausführungsbeispiele der Erfindung werden im folgenden unter Bezugnahme auf die anliegenden Zeichnungen näher erläutert. In den Zeichnungen zeigen

Fig. 1 eine schematische Schnittansicht einer Kreiselpumpe;

Fig. 2 eine schematische Schnittansicht einer Turbine;

Fig. 3 eine Schnittansicht eines hydrodynamischen Wandlers nach dem Trilok-Prinzip;

Fig. 4 eine grafische Darstellung des Verlaufs des Drehmoments als Funktion der Drehzahl entsprechend dem Primär-Kennlinienfeld eines hydrodynamischen Wandlers nach Fig. 3;

Fig. 5 eine grafische Darstellung des Verlaufs des Drehmoments als Funktion der Drehzahl entsprechend dem Sekundär-Kennlinienfeld eines hydrodynamischen Wandlers nach Fig. 3;

Fig. 6 eine Schnittansicht eines hydrodynamischen Getriebes;

Fig. 7 eine Schnittansicht entlang der Linie A–A in Fig. 6;

Fig. 8 eine Schnittansicht entlang der Linie B–B in Fig. 6;

Fig. 9 eine schematische Schnittansicht einer hydrodynamischen Kupplung und

Fig. 10 eine Schnittansicht eines hydrodynamischen Wandlers nach einem weiteren Ausführungsbeispiel der Erfindung.

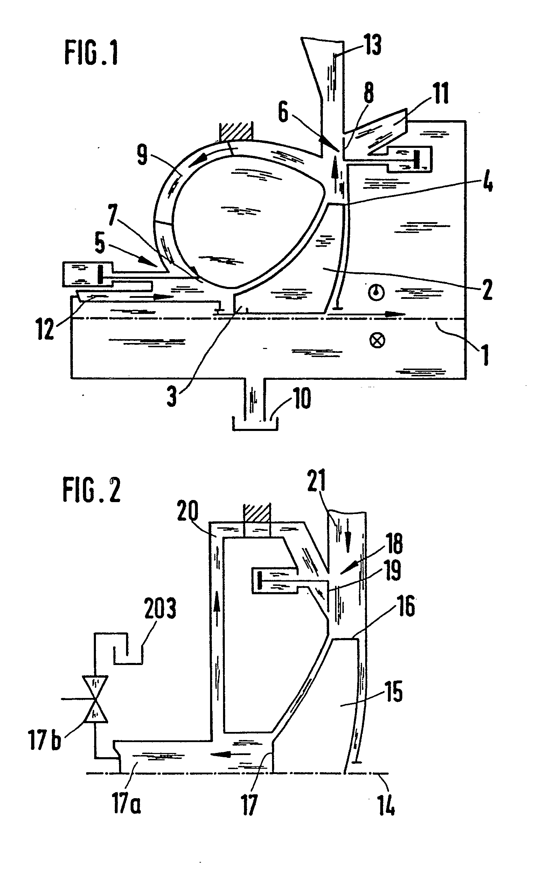

Fig. 1 zeigt eine schematische Schnittansicht einer Kreiselpumpe (bzw. eines Verdichters, wenn es sich bei dem Strömungsmittel um ein Gas handelt) mit einem auf einer Antriebswelle 1 sitzenden Pumpenrad 2. Am Zulauf 3 und am Auslaß 4 des Pumpenrads 2 sind Injektoreinrichtungen 5 bzw. 6 angeordnet, die jeweils eine Treibdüse aufweisen, deren Durchtrittsquerschnitt mit einem als Drossel wirkenden Verstellorgan 7 bzw. 8 verändert werden kann. Der Pumpenradauslaß 4 ist mit dem Pumpenradzulauf 3 durch eine Bypass-Einrichtung 9 verbunden, die als Treibkanal für die Injektoreinrichtung 5 am Zulauf 3 dient. Mit dem Verstellorgan 7 dieser Injektoreinrichtung 5 lassen sich gleichzeitig der Öffnungsquerschnitt des Bypasses 9 und des Pumpenradzulaufs 3 verändern. An der Injektoreinrichtung 6 an der Aulaßseite 4 des Pumpenrads 2 werden der aus der Pumpe austretende Fluidstrom und ein Fluidstrom auf niedrigerem Druck zusammengeführt, der aus einem mit einem Niederdruckbehälter 10 in Verbindung stehenden Förderkanal 11 angesaugt wird.

Ist das Verstellorgan 8 der Injektoreinrichtung 6 in seiner Ausgangsstellung, d.h. die Auslaßleitung 13 des Pumpenrads 2 voll geöffnet, und die Bypass-Einrichtung 9 durch das Verstellorgan 7 vollständig abgeschlossen, liefert die Pumpe eine Fluidmenge $V_0$ mit dem Förderdruck $H_0$. Wird nur eine Fördermenge $V_1 < V_0$ benötigt, wird der Pumpendurchsatz entsprechend gedrosselt. An einer herkömmlichen Drossel würde dabei der sich einstellende erhöhte Förderdruck $H_1$ abgebaut und die potentielle Energie in Wärme umgewandelt. Bei der dargestellten Pumpe wird an der Injektoreinrichtung 6 mit dem Verstellorgan 8 der Öffnungsquerschnitt der Auslaßleitung 13 verringert und gleichzeitig der Förderkanal 11 geöffnet, so daß die Pumpe nur noch eine Fluidmenge $V_2 < V_1$ liefern muß, womit eine geringere Pumpenleistung erforderlich wird. Die Differenzmenge $V_1 – V_2$ wird von dem mit hohem Druck aus der Pumpe austretenden Fluid aus dem Niederdruck-Förderkanal 11 angesaugt.

Wird mit dem Verstellorgan 7 der Injektoreinrichtung 5 am Pumpenzulauf 3 der Bypass 9 geöffnet und an der Injektoreinrichtung 6 der Durchtrittsquerschnitt der Auslaßleitung 13 verringert, strömt ein Teil des aus der Pumpe austretenden Fluidstroms mit hoher Geschwindigkeit zurück zum Pumpenzulauf 3, d.h. der Bypass 9 dient als Treibkanal der dort angeordneten Injektoreinrichtung 5.

Die Injektoreinrichtung 5 ist so aufgebaut. daß sich mit der jeweiligen Beschaufelung des Pumpenrads 2 am Pumpenradzulauf 3 kein Stoßverlust im Zuflußfluid ergibt und Kavitationserscheinungen vermieden werden. Die Geschwindigkeit des aus der Injektoreinrichtung 5 austretenden und in das Pumpenrad 2 einströmenden Fluids kann durch Wahl des Mischungsverhältnisses der zusammengeführten Fluidströme, des Abstands der Injektortreibdüse vom Pumpenradzulauf 3 und anderer Parameter so gesteuert werden, daß am Pumpenrad 2 ein positives Drehmoment erzeugt wird.

Mit den am Zulauf 3 und am Auslaß 4 der Pumpe angeordneten Injektoreinrichtungen 5 bzw. 6 und dem Rückkopplungskanal oder Bypass 9 zwischen Auslaß 4 und Zulauf 3 lassen sich damit Pumpendurchsatz, Strömungsgeschwindigkeit im Pumpenrad, Förderdruck und Fördermenge bei wechselnden Betriebsverhältnissen so steuern, daß die Pumpe mit ihrem optimalen Wirkungsgrad arbeitet.

In Fig. 2 ist eine schematische Schnittansicht einer erfindungsgemäß aufgebauten Turbine gezeigt. Vom Turbinenradauslaß 17, aus dem in diesem Fall Fluid mit relativ niedriger Geschwindigkeit austritt, führt ein Rückkopplungs- oder Bypass-Kanal 20 über eine Injektoreinrichtung 18 zurück zum Turbinenradzulauf 16. Mit dem Verstell- oder Drosselorgan 19 der Injektoreinrichtung 18 kann der Durchtrittsquerschnitt des als Förderkanal dienenden Bypasses 20 und gleichzeitig der als Treibkanal dienenden Turbinenrad-Zulaufleitung 21 verändert werden. Die Injektoreinrichtung 18 ermöglicht damit eine Steuerung der Strömungsgeschwindigkeit, des Druckes und der Menge des in das Turbinenrad 15 einströmenden Fluids. Wie im Falle der oben beschriebenen Kreiselpumpe ist auch hier die Injektortreibdüse so gerichtet, daß bei der Auslegdrehzahl der Turbine und der Ausleggeschwindigkeit des Fluids in der Drossel die Stoßverluste beim Einströmen in die Turbinenradschaufeln minimiert werden. In der zu einem Niederdruckspeicher 203 führenden Auslaßleitung 17a der Turbine kann mit einer verstellbaren Drossel 17b die Abströmmenge und -geschwindigkeit gesteuert werden.

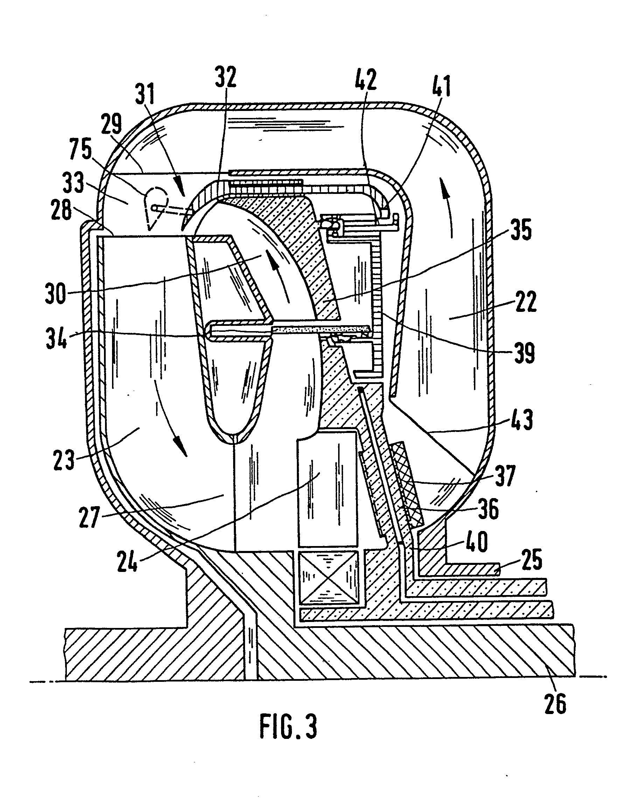

Die wesentlichsten Vorteile ergeben sich bei Anwendung der Erfindung auf ein hydrodynamisches Getriebe, wie es in Fig. 3 beispielhaft in einer Schnittansicht dargestellt ist. Ein hydrodynamisches Getriebe oder Föttinger-Getriebe ist im wesentlichen aus einem Pumpenrad 22 und einem Turbinenrad 23 sowie, falls ein Wandlerbetrieb erfolgen soll, aus einem Leitrad 24 aufgebaut. Bei einem solchen Strömungsgetriebe überlagern sich daher die nach der Erfindung bei einer Kreiselpumpe und bei einer Turbine erzielten positiven Effekte, wie sie anhand von Fig. 1 und 2 erläutert wurden.

Der in Fig. 3 dargestellte hydrodynamische Wandler, der als zweiphasiger Trilok-Wandler aufgebaut ist, weist ein auf einer Antriebswelle 25 sitzendes, verlängertes Pumpenrad 22 und ein auf einer Abtriebswelle 26 sitzendes, verkürztes Turbinenrad 23 sowie ein Leitrad 24 auf. Vom Turbinenradauslaß 27 zum Turbinenradzulauf 28 bzw. Pumpenradauslaß 29 führt ein Rückkopplungskanal 30, d.h. eine Bypass-Einrichtung, durch die ein Teil des aus dem Turbinenrad 23 austretenden Fluids am Pumpenrad 22 vorbei zurück zum Turbinenradeinlaß 28 strömt. Die beiden aus dem Pumpenrad 22 und aus dem Bypass 30 austretenden Fluidströme werden an einer Injektoreinrichtung 31 zusammengeführt, mit deren als Drossel wirkendem Verstellorgan 32 gleichzeitig der Öffnungsquerschnitt des Bypasses 30 vergrößert und der des Kanals 33 zwischen Pumpenradauslaß 29 und Turbinenradzulauf 28 verringert werden können. Daneben ist in diesem Ausführungsbeispiel ein zusätzliches ringförmiges Drosselorgan 34 vor im Bypass-Kanal 30 angeordneten Schaufeln 35 vorgesehen, mit dem die Öffnung des Bypasses 30 verändert werden kann.

Der Bypass 30 ist als ringförmiger, radialer Kanal mit einer starren Beschaufelung 35 in gehäusefesten Trägern 36 ausgebildet, die im Innentorus des Wandlers enden und dem Fluidstrom ausgesetzt sind. Sie erzeugen damit einen Strömungswiderstand, der zu Leistungsverlusten führt. Zur Minimierung dieser Verluste sind die zylindrischen Träger 36 mit strömungsgünstigen Profilelementen 37 umgeben, die vorzugsweise durch den Fluidstrom ähnlich einer Wetterfahne so ausgerichtet werden, daß sie nur einen minimalen Strömungswiderstand bieten.

Das Verstellorgan 32 der Injektoreinrichtung 31 sowie das Drosselorgan 34 im Bypass 30 sind zur Wandlerachse 26 konzentrische, ringförmige Elemente, sogenannte Ringdrosseln. Der Vorteil dieser Ringdrosseln liegt darin, daß nur ein einziges Element gegen einen· in schnellen Fluiden geringen, statischen Druck bewegt werden muß. Der dynamische Druck wirkt radial auf den Ringumfang und hebt sich damit am Ring auf.

Die Ringdrosseln 32 und 34 sind mit einem zur Wandlerachse 26 konzentrischen Stellrad 39 axial verschiebbar. Das Stellrad 39 ist in diesem Ausführungsbeispiel von der Außenseite des Wandlergehäuses aus über eine im Innentorus des Wandlers angeordnete hydraulische Einrichtung drehbar. Die Versorgung dieser Einrichtung mit Hydraulikflüssigkeit erfolgt über in den Trägern 36 vorgesehene Kanäle 40. Das ringförmige Verstellorgan 32 weist an seinem Innenumfang radial stehende Fortsätze 41 auf, die in schraubenförmigen Nuten 42 am Außenumfang des Stellrades 39 einrasten. Das Drehen des Stellrades 39 führt zu einer Axialverschiebung der Fortsätze 41 und damit des Verstellorgans 32. Die Betätigung des Drosselorgans 34 erfolgt über einen ähnlichen Mechanismus.

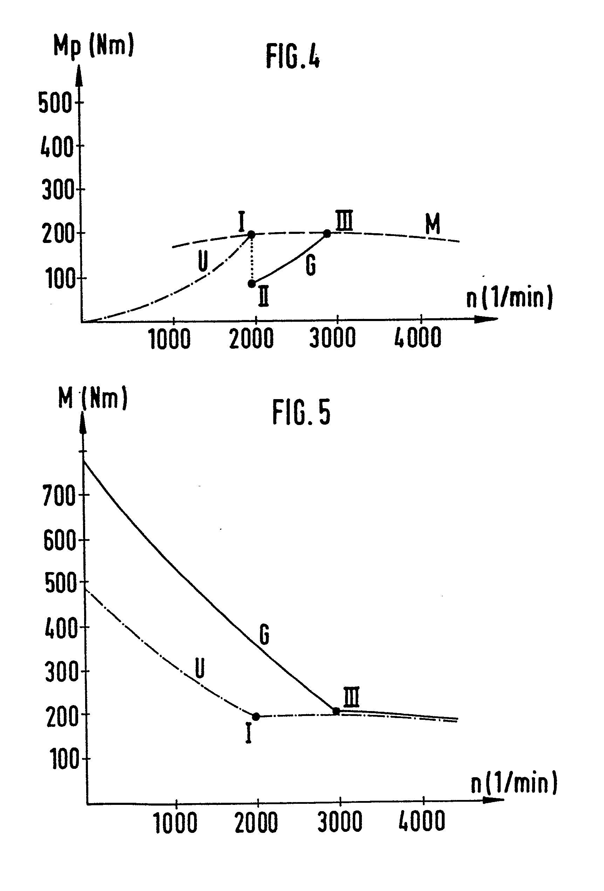

Die Beschreibung der Funktionsweise des in Fig. 3 dargestellten hydrodynamischen Wandlers erfolgt unter Bezugnahme auf die Fig. 4 und 5, die Ausschnitte aus dem Primär-Kennlinienfeld bzw. dem Sekundär-Kennlinienfeld, d.h. dem Verlauf des Drehmoments M als Funktion der Drehzahl n zeigen.

Ist im hydrodynamischen Wandler nach Fig. 3 das Verstellorgan 32 der Injektoreinrichtung 31 in der gezeigten Stellung, so ist der Pumpenradauslaß 29 ungedrosselt und der Bypass 30 verschlossen. Damit liegt der Fluidkreislauf des herkömmlichen Trilok-Wandlers vor. Durch das aus der Pumpe 22 in die Turbine 23 einströmende Fluid wird am Turbinenrad 23 das Pumpendrehmoment wirksam. Das aus der Turbine abströmende Fluid erzeugt am Turbinenrad 23 ein zusätzliches positives Reaktionsmoment in Turbinendrehrichtung, welches mit steigender Turbinendrehzahl sinkt. Das hinter dem Turbinenrad 23 angeordnete Leitrad 24 dient der Umlenkung des aus der Turbine abströmenden Fluids, so daß das Fluid verlustarm in den Pumpeneinlaß 43 zurückströmt. Am Pumpenrad 22 wirkt das Pumpendrehmoment $M_P$, am Turbinenrad 23 das Turbinendrehmoment $M_T$, das sich als Summe des Pumpendrehmoments $M_P$ und des Reaktionsmoments $M_R$ ergibt. Durch diesen Effekt tritt die «Wandlung» ein, d.h. die drehmomentverstärkende Wirkung an der Turbine 23.

Bei herkömmlichen, unverstellbaren Trilok-Wandlern, deren Pumpe beispielsweise von einem Verbrennungsmotor angetrieben wird, kann die Pumpe im Festbremspunkt, d.h. bei stehender Turbine, nur mit einer bestimmten Maximaldrehzahl drehen, der sogenannten «stall speed». Das resultiert daraus, daß die an der Pumpe erforderliche Leistung proportional zur dritten Potenz von·n steigt, während die maximal mögliche Leistungsabgabe des Verbrennungsmotors nur linear mit der Drehzahl n zunimmt. Die «stall speed» ist dem Primär-Kennlinienfeld des Wandlers in Fig. 4 zu entnehmen; sie liegt am Schnittpunkt I der Momentenkennlinie U der ungedrosselten Pumpe und der Momentenkennlinie M des Verbrennungsmotors vor.

Der erfindungsgemäß aufgebaute Wandler ist über die Injektoreinrichtung 31 und den Bypass 30 steuerbar, womit sich das maximale Turbinendrehmoment vor allem bei geringen Turbinendrehzahlen erheblich erhöhen läßt. Diese Erhöhung des Turbinendrehmoments ist im wesentlichen auf zwei Effekte zurückzuführen, die im folgenden beschrieben werden:

(1) Erhöhung der Pumpenleistung

Zum Anfahren wird bei dem hydrodynamischen Getriebe nach Fig. 3 das ringförmige Verstellorgan 32 vor dem Pumpenauslaß 29 geschoben, und damit die Pumpe gedrosselt und der Bypass 30 geöffnet. Dadurch sinkt der Pumpendurchsatz $\dot{V}_P$ von $\dot{V}_P$ (I) auf $\dot{V}_P$ (II), die erforderliche Pumpenleistung von P (I) auf P (II) und das Pumpendrehmoment von $M_P$ (I) auf $M_P$ (II). Entsprechend Fig. 4 läßt sich damit die Pumpendrehzahl n so weit erhöhen, bis im Kennlinienpunkt III wieder das maximale Motordrehmoment M erreicht ist. Das aus der Pumpe in die Turbine einströmende Fluid erzeugt am Turbinenradzulauf 28 einen Strahldruck, der von dem Durchsatz der Pumpe $\dot{V}_P$ und der Ausströmgeschwindigkeit abhängt. Das Reaktionsmoment $M_R$ an der Turbine ist eine Funktion der aus der Turbine abströmenden Fluidmenge und der Abströmgeschwindigkeit.

Für Strömungsgetriebe gilt folgende Beziehung (E. Kickbusch, «Föttinger-Kupplungen und Föttinger-Getriebe», Springer-Verlag 1962):

$$\omega_P \cdot M_P = \rho \cdot \dot{V}_P \cdot H_P$$

wobei:

$M_P$ = Pumpendrehmoment
$\omega_P$ = Winkelgeschwindigkeit der Pumpe

$\rho$ = spezifisches Fluidgewicht
$\dot{V}_P$ = Durchsatz der Pumpe pro Zeiteinheit
$H_P$ = Pumpenarbeit pro Kilogramm Pumpenfluid

Da nach Fig. 4 die Pumpendrehzahl im Kennlinienpunkt III größer als im Punkt I ist, d.h. $\omega_P$ (III) / $\omega_P$ (I) > 1, und die Pumpendrehmomente etwa gleich sind, d.h. $M_P$ (I) = $M_P$ (III), ergibt sich:

$$\dot{V}_P \text{ (III)} \cdot H_P \text{ (III)} / \dot{V}_P \text{ (I)} \cdot H_P \text{ (I)} \simeq$$
$$\omega_P \text{ (III)} / \omega_P \text{ (I)} > 1$$

Demnach ist der Strahldruck am Turbinenradzulauf 28 im Kennlinienpunkt III gegenüber dem im Kennlinienpunkt I vergrößert.

Bei Wandlern mit herkömmlichen Drosseln, d.h. ohne eine Injektoreinrichtung, geht ein beträchtlicher Teil der Energie des Pumpenstroms durch den Borda-Carnotschen Effekt hinter der Drossel in Wärmeenergie über und damit ungenutzt verloren. In dem erfindungsgemäß aufgebauten Wandler findet dagegen im Kanal 33 hinter der Injektoreinrichtung 31 ein Impulsaustausch des aus der Pumpe austretenden Fluids mit dem Bypass-Fluid statt, so daß die Menge und Geschwindigkeit des aus der Pumpe austretenden Fluids und damit auch das Reaktionsmoment an der Turbine zunimmt.

(2) Verringerung der Strömungsverluste

Aus der Bilanzgleichung eines Wandlers ergibt sich, daß die Summe der Förderhöhen von Pumpe und Turbine sowie der äquivalenten Förderhöhe der Stoss- und Reibungsverluste Null sein muß. Mit dem erfindungsgemäßen Wandler, an dessen Pumpenradauslaß 29 die Injektoreinrichtung 31 vorgesehen ist, lassen sich die Stoßverluste beim Übergang des Fluids von der Pumpe in die Turbine vor allem bei niedrigen Turbinendrehzahlen durch Änderung der Abströmrichtung und -geschwindigkeit am Pumpenradauslaß 29 auf einen Bruchteil der Stoßverluste herkömmlich gedrosselter Trilok-Wandler verringern. Weiterhin sinken durch Verringerung des Pumpendurchsatzes mit dem vorgesehenen Bypass 30 die Reibverluste in Pumpe und Leitrad sowie die Stoßverluste am Leitrad 24.

Aus dem Sekundär-Kennlinienfeld nach Fig. 5 ist die Wirkung der Drosselung und anschließenden Erhöhung der Pumpendrehzahl zu entnehmen. Für den ungedrosselten Wandler (Kurve U) geht der Wandlungsbereich bei 2000 U/min in den Kupplungsbereich über, für den gedrosselten Wandler (Kurve G) liegt dieser Punkt bei 3000 U/min. Daraus ergibt sich eine Streckung des Wandlungsbereichs. Der in Fig. 3 gezeigte, erfindungsgemäße Wandler läßt sich über die Injektoreinrichtung 31 und den Bypass 30 so steuern, daß alle Betriebspunkte unter der Kennlinie G realisierbar sind, während bei herkömmlichen Trilok-Wandlern die Betriebspunkte auf einer Kennlinie liegen, d.h. die herkömmliche Wandlerkennlinie geht in einen Wandlerbereich über.

Der in Fig. 3 dargestellte hydrodynamische Wandler mit radial aufgebauter Zentripetalturbine läßt sich auch als hydrodynamische Bremse einsetzen. Wenn das Turbinenrad 23 schnell dreht und mit dem ringförmigen Verstellorgan 32 der Pumpenauslaß 29 gedrosselt und der Bypass 30 geöffnet wird, wird die Radialturbine zur Pumpe. Sie fördert dann das Fluid in umgekehrter Strömungsrichtung durch den Bypass 30, durch dessen starre Beschaufelung ein Bremsmoment für das Turbinenrad 23 ausgeübt wird. Dieses Bremsmoment läßt sich durch die Stellung der Ringdrossel 32 steuern.

Als Pumpenantrieb für ein hydrodynamisches Getriebe wird häufig ein Verbrennungsmotor eingesetzt, der eine gewisse Leerlaufdrehzahl aufweist. Aufgrund der ständig drehenden Pumpe wird auch dann ein Turbinendrehmoment erzeugt, wenn es nicht erwünscht ist, woraus ein unnötiger Energieverbrauch und die «Kriechneigung» von Kraftfahrzeugen mit Automatikgetrieben resultieren. Bei dem erfindungsgemäßen hydrodynamischen Getriebe nach Fig. 3 kann die Pumpe abgedrosselt werden, wenn die Turbine steht oder langsam dreht, wodurch das Pumpendrehmoment und der Energieverbrauch sinken und die «Kriechneigung» verschwindet.

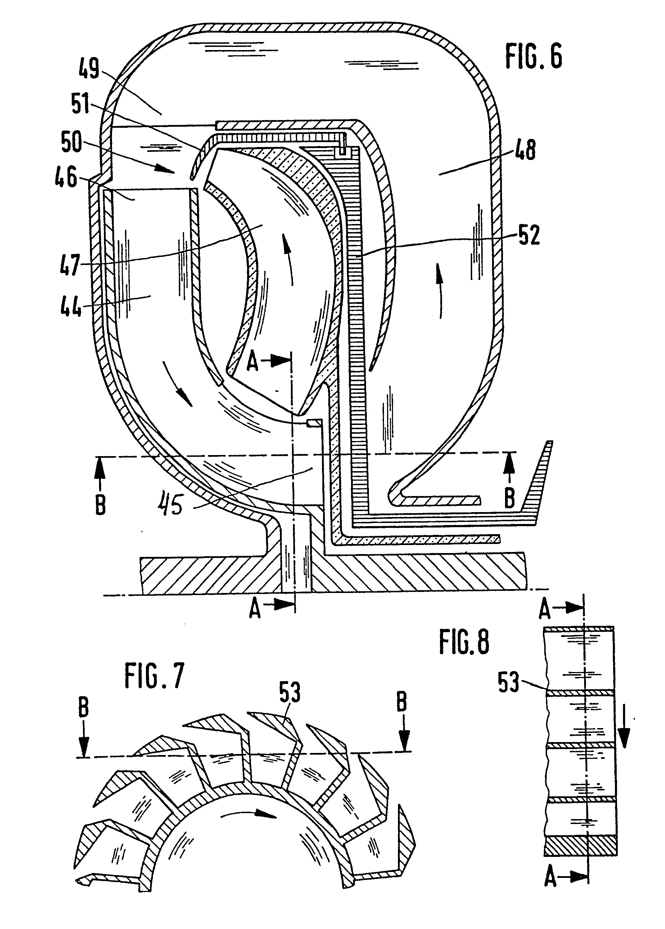

In Fig. 6 ist eine weitere Ausführungsform eines erfindungsgemäß aufgebauten hydrodynamischen Getriebes gezeigt, das sowohl als hydrodynamische Kupplung als auch als hydrodynamischer Wandler eingesetzt werden kann. Nach diesem Ausführungsbeispiel zweigt vor dem Auslaß 45 des Turbinenrads 44 ein Bypass 47 ab, der einen Teil des in das Turbinenrad 44 einströmenden Fluids am Pumpenrad 48 vorbei, zurück zum Turbinenradzulauf 46 führt. Zwischen Pumpenradauslaß 49 und Turbinenradzulauf 46 ist eine Injektoreinrichtung 50 mit einem als Ringdrossel aufgebauten Verstellorgan 51 angeordnet, mit dem der Kanalquerschnitt zwischen Pumpenradauslaß 49 und Turbinenradzulauf 46 und gleichzeitig der Öffnungsquerschnitt des Bypasses 47 eingestellt werden können. Die Ringdrossel 51 wird mit Hilfe eines von außen drehbaren Stellrades in ähnlicher Weise axial bewegt, wie es im Zusammenhang mit dem Ausführungsbeispiel nach Fig. 3 beschrieben wurde.

Die Funktionsweise des Getriebes nach Fig. 6 entspricht im wesentlichen der des Ausführungsbeispiels nach Fig. 3, der Aufbau ist jedoch so vereinfacht, daß ein Wandlerbetrieb auch ohne Leitrad möglich ist. Zu diesem Zweck sind die Turbinenradschaufeln 53 entsprechend Fig. 7 (Schnitt entlang der Linie A–A in Fig. 6) und Fig. 8 (Schnitt entlang der Linie B–B in Fig. 6) so ausgebildet und der Bypass 47 so angeordnet, daß der bei gedrosselter Pumpe aus der Turbine in den Bypass 47 einströmende Fluidstrom und der aus dem Bypass austretende Fluidstrom jeweils ein Reaktionsmoment auf das Turbinenrad 44 ausüben. Damit fungieren die Turbinenradschaufeln 53 und der Bypass 47 als Drehmomentstütze und ermöglichen den Wandlerbetrieb.

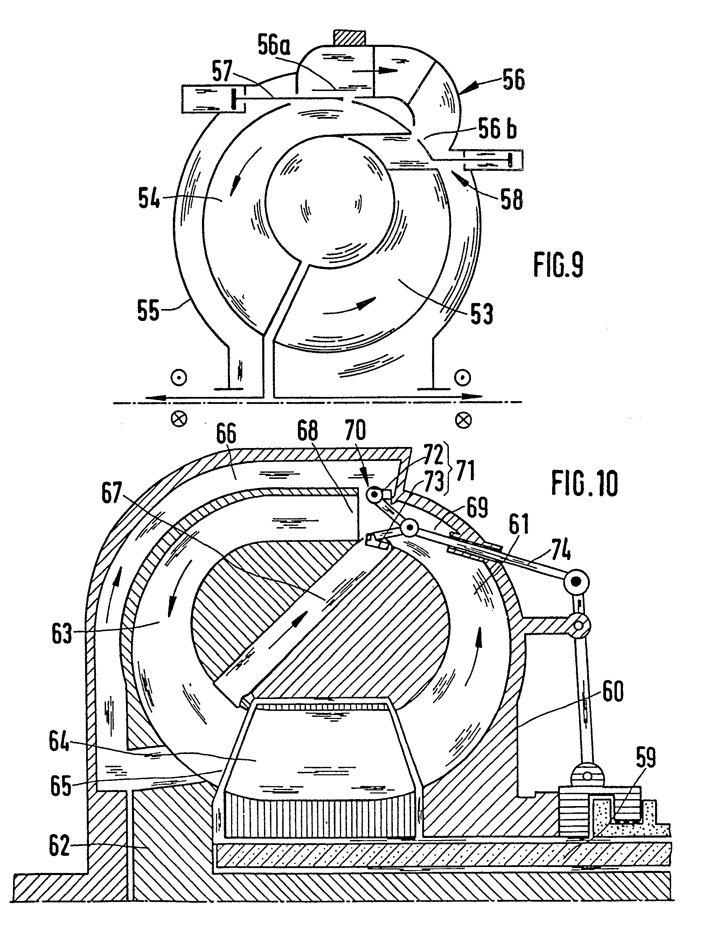

In Fig. 9 ist eine schematische Schnittansicht eines weiteren Ausführungsbeispiels einer erfindungsgemäß aufgebauten hydrodynamischen Kupplung gezeigt. Ein Pumpenrad 53 und ein Turbinenrad 54 sind in einem Gehäuse 55 angeordnet. Vom Turbinenrad 54 zweigt ein Bypass 56 ab, der einen Teil des durch das Turbinenrad 54 strömenden Fluids zurück zum Auslaß des Pumpenrads 53 führt. Der Bypass 56 verläuft in diesem Fall nicht im Innentorus des Wandlers, sondern auf der Außenseite des Gehäuses 55, womit der Aufbau vereinfacht wird. Am Zulauf 56a ist eine Drossel 57, am Auslaß 56b des Bypasses 56 eine Injektoreinrichtung 58 vorgesehen. Die Funktionsweise und die Steuerung dieses hydrodynamischen Getriebes entsprechen dem unter Bezugnahme auf die Fig. 3 bis 5 beschriebenen Ausführungsbeispiel.

In Fig. 10 ist ein weiteres Ausführungsbeispiel eines erfindungsgemäß aufgebauten Strömungsgetriebes dargestellt. Hierbei sind in einem Gehäuse 59 auf einer Antriebswelle 60 ein Pumpenrad 61 und auf einer Abtriebswelle 62 ein Turbinenrad 63 angeordnet. Das Leitrad 64 des als Trilok-Wandler aufgebauten Getriebes läuft im Freilauf im Gehäuse 59. Vom Turbinenradauslaß 65 führen ein Bypass 66 auf der Außenseite des Turbinenrades 63 und ein Bypass 67 im Innentorus des Wandlers zurück zum Turbinenradzulauf 68. Zwischen Pumpenradauslaß 69 und Turbinenradzulauf 68 ist eine Injektoreinrichtung 70 vorgesehen, in der die aus dem Pumpenrad 61 austretende Fluidströmung und die Strömungskomponenten aus den Bypass-Einrichtungen 66 bzw. 67 zusammengeführt werden. Als Verstellorgan 71 der Injektoreinrichtung 70 dienen in diesem Falle in zwei Ringen angeordnete Klappen 72, 73, die die Durchtrittsfläche der Auslaßöffnung des Pumpenrades 61 begrenzen. Über ein von der Außenseite des Wandlers aus bedienbares Gestänge 74 können die äußeren Klappen 72 nach innen und die inneren Klappen 73 nach außen bewegt werden. Durch eine derartige Klappenbewegung werden die Bypass-Einrichtungen 66 und 67 geöffnet, während der Öffnungsquerschnitt des Pumpenradauslasses verringert wird. Die Funktionsweise dieses Ausführungsbeispiels entspricht wiederum der des Ausführungsbeispiels nach Fig. 3.

In den Ausführungsbeispielen nach Fig. 3 und Fig. 6 werden die Verstellorgane der Injektoreinrichtungen mit einem konzentrisch zur Wandlerachse angeordneten, ringförmigen Stellrad bewegt, im Ausführungsbeispiel nach Fig. 10 dient ein Gestänge zur Betätigung der Drosselklappen der Injektoreinrichtung. Daneben ist es auch möglich, in der Fluidströmung ein von dieser verstellbares Betätigungsglied anzuordnen, wie es in Fig. 3 beispielhaft mit Bezugsziffer 75 dargestellt ist, das das Verstellorgan der Injektoreinrichtung, z.B. die Ringdrossel oder die Drosselklappen, bewegt.

Die Erfindung läßt sich auch vorteilhaft bei einem Turbolader für Verbrennungskraftmaschinen anwenden. Bei derartigen Maschinen tritt in den unteren Drehzahlbereichen eine als «Turboloch» bekannte Erscheinung auf, d.h. der Turbolader erbringt bei niedrigen Motordrehzahlen keine Leistung. Ein Aufbau der Turbine des Turboladers entsprechend Fig. 2 ermöglicht durch die Einstellung des Verstell- oder Drosselorgans 19 in Abhängigkeit vom Betriebspunkt des Verbrennungsmotors eine günstige Steuerung des Laders in allen Drehzahlbereichen und damit zumindest eine Minderung des «Turboloch»-Effekts.

**Patentansprüche**

1. Strömungsmaschine mit
einem Arbeitsteil (2; 15; 23; 44; 54; 63),
einer vor dem Zulauf des Arbeitsteils angeordneten Injektoreinrichtung (5; 18; 31; 50; 58; 70),
einer Bypass-Einrichtung (9; 20; 30; 47; 56; 66, 67), über die ein Teil der das Arbeitsteil durchströmenden Gesamtströmung zur Injektoreinrichtung zurückgeführt wird, und
einem Verstellorgan (7; 19; 32; 51; 72, 73, 74) zur Steuerung einer der beiden Komponenten der das Arbeitsteil durchströmenden Gesamtströmung,
dadurch gekennzeichnet,
daß die Injektoreinrichtung (5; 18; 31; 50; 58; 70) an der Stelle der Zusammenführung der beiden Strömungskomponenten angeordnet ist und
daß das Verstellorgan (7; 19; 32; 51; 72, 73, 74) als Drossel zur Änderung der von der Strömungskomponente mit dem höheren spezifischen Energieinhalt durchsetzten Querschnittsfläche der Injektoreinrichtung ausgebildet ist.

2. Strömungsmaschine nach Anspruch 1, dadurch gekennzeichnet, daß das Arbeitsteil eine Arbeitsmaschine (2) ist und der über die Bypass-Einrichtung zurückgeführte Teil der Gesamtströmung die Strömungskomponente der Injektoreinrichtung (5) mit höherem spezifischem Energieinhalt bildet.

3. Strömungsmaschine nach Anspruch 1, dadurch gekennzeichnet, daß am Auslaß (4) der Arbeitsmaschine (2) eine weitere steuerbare Injektoreinrichtung (6) angeordnet ist.

4. Strömungsmaschine nach Anspruch 3, gekennzeichnet durch eine derartige Steuerung der beiden Injektoreinrichtungen (5, 6), daß bei Verminderung des Querschnitts der Auslaßleitung (13) durch die weitere Injektoreinrichtung (6) der Querschnitt der Bypass-Einrichtung (9) durch die erste Injektoreinrichtung (5) vergrößert wird.

5. Strömungsmaschine nach Anspruch 1, dadurch gekennzeichnet, daß das Arbeitsteil eine Turbine (15) ist, und der über die Bypass-Einrichtung zurückgeführte Teil der Gesamtströmung die Strömungskomponente der Injektoreinrichtung (18) mit niedrigerem spezifischem Energieinhalt bildet.

6. Strömungsmaschine nach Anspruch 5, dadurch gekennzeichnet, daß das Arbeitsteil die Turbine (15) eines Turboladers an einem Verbrennungsmotor ist, wobei das Verstellorgan (19) in Abhängigkeit vom Betriebspunkt des Verbrennungsmotors gesteuert wird.

7. Strömungsmaschine nach Anspruch 5 oder 6, dadurch gekennzeichnet, daß in der Auslaßleitung (17a) der Turbine (15) eine verstellbare Drosseleinrichtung (17b) angeordnet ist.

8. Strömungsmaschine nach Anspruch 1, dadurch gekennzeichnet, daß das Arbeitsteil eine Turbine (23) ist, die mit einer Pumpe (22) zu einem Strömungsgetriebe zusammengeschaltet ist, und daß die Injektoreinrichtung (31) zwischen dem Pumpenauslaß (29) und dem Turbinenzulauf (28) angeordnet ist.

9. Strömungsmaschine nach einem der Ansprüche 1 bis 8, dadurch gekennzeichnet, daß in der Bypass-Einrichtung (30) Schaufeln (35) angeordnet sind.

10. Strömungsmaschine nach Anspruch 9, dadurch gekennzeichnet, daß vor den Schaufeln (35) der Bypass-Einrichtung (30) ein Drosselorgan (34) angeordnet ist.

11. Strömungsmaschine nach Anspruch 10, dadurch gekennzeichnet, daß das Drosselorgan (34) ein zur Drehachse (26) des Arbeitsteils (63) konzentrisches ringförmiges Bauteil aufweist.

12. Strömungsmaschine nach einem der Ansprüche 1 bis 11, dadurch gekennzeichnet, daß das Verstellorgan der Injektoreinrichtung (31) ein zur Drehachse (26) des Arbeitsteils (23) konzentrisches ringförmiges Bauteil (32) aufweist.

13. Strömungsmaschine nach Anspruch 11 oder 12, dadurch gekennzeichnet, daß das ringförmige Bauteil (32, 34) über eine Schraubenführung (42) axial bewegbar ist.

14. Strömungsmaschine nach Anspruch 13, dadurch gekennzeichnet, daß die Schraubenführung (42) an einem zu der Drehachse (26) des Arbeitsteils (23) konzentrischen Stellrad (39) angeordnet ist.

15. Strömungsmaschine nach einem der Ansprüche 1 bis 14, dadurch gekennzeichnet, daß das Verstellorgan (32) der Injektoreinrichtung (31) in seiner einern Endstellung die Bypass-Einrichtung (30) versperrt und bei Verstellung aus dieser Endstellung den von der einen höheren spezifischen Energieinhalt aufweisenden Strömungskomponente durchflossenen Querschnitt (33) drosselt.

16. Strömungsmaschine nach einem der Ansprüche 8 bis 15, dadurch gekennzeichnet, daß die Bypass-Einrichtung (30) von einem im Innentorus der Maschine gehäusefesten Teil (35) gebildet ist, dessen durch den Strömungskanal führende Träger (36) mit den Strömungswiderstand verringernden Profilelementen (37) versehen sind.

17. Strömungsmaschine nach Anspruch 16, dadurch gekennzeichnet, daß die Profilelemente (37) um die Träger (36) drehbar und von der Strömung auf ihren minimalen Strömungswiderstand einstellbar sind.

18. Strömungsmaschine nach einem der Ansprüche 8 bis 17, dadurch gekennzeichnet, daß die Schaufeln (53) des Turbinenrades (44) so geformt sind, daß das in die Bypass-Einrichtung (47) gelenkte Strömungsmittel auf das Turbinenrad ein in dessen Drehrichtung wirkendes Reaktionsmoment ausübt.

19. Strömungsmaschine nach einem der Ansprüche 1 bis 18, dadurch gekennzeichnet, daß in der Strömung ein von dieser verstellbares Betätigungsglied (75) angeordnet ist, das das Verstellorgan (32) der Injektoreinrichtung (31) bewegt.

20. Verfahren zur Steuerung der ein Pumpen- und ein Turbinenrad aufweisenden Strömungsmaschine nach einem der Ansprüche 8 bis 19, wobei für die ungedrosselte Pumpe (22) eine unter der Maximaldrehzahl des Pumpenantriebs liegende Festbremsdrehzahl gegeben ist, dadurch gekennzeichnet, daß zur Erhöhung des an der Turbine (23) erreichbaren Drehmoments die Pumpe (22) gedrosselt und damit das Pumpendrehmoment abgesenkt, die Bypass-Einrichtung (30) geöffnet und die Pumpendrehzahl erhöht wird.

21. Verfahren zur Steuerung der ein Pumpen- und ein Turbinenrad aufweisenden Strömungsmaschine nach einem der Ansprüche 9 bis 19, wobei die Turbine (23) eine Zentripetalturbine ist, dadurch gekennzeichnet, daß zum Bremsen bei hohen Turbinendrehzahlen der Pumpenauslaß (29) gedrosselt wird, so daß die Turbine (23) als Pumpe wirkt, die Strömungsrichtung umkehrt und das Fluid durch die Schaufeln (35) der geöffneten Bypass-Einrichtung (30) preßt, wobei das an der Turbine entstehende Bremsmoment durch die Drosselstellung steuerbar ist.

22. Verfahren zur Steuerung der ein Pumpen- und ein Turbinenrad aufweisenden Strömungsmaschine nach einem der Ansprüche 8 bis 19, wobei der eingeschaltete Pumpenantrieb mit einer Minimaldrehzahl dreht, dadurch gekennzeichnet, daß bei stehender oder langsam drehender Turbine (23) und nicht benötigtem, durch den Fluidstrom erzeugten Drehmoment an der Turbine der Pumpenauslaß (29) mit dem Verstellorgan (32) vollständig oder teilweise geschlossen wird, so daß das Pumpen- und Turbinendrehmoment sinken.

**Claims**

1. A turbo machine comprising
a working part (2; 15; 23; 44; 54; 63),
injector means (5; 18; 31; 50; 58; 70) disposed upstream of the inlet of the working part,
bypass means (9; 20; 30; 47; 56; 66; 67) via which part of the total flow through the working part is returned to the injector means, and
an adjusting member (7; 19; 32; 51; 72, 73, 74) for controlling one of the two components of the total flow through the working part,
characterized in
that the injector means (5; 18; 31; 50; 58; 70) is disposed at the merging position of the two flow components, and
that the adjusting member (7; 19; 32; 51; 72, 73, 74) is formed as a throttle for varying the cross-sectional area of the injector means penetrated by the flow component having the higher specific energy content.

2. The turbo machine of claim 1, characterized in that the working part is a working machine (2) and the part of the total flow returned via the bypass means forms the flow component of the injector means (5) having the higher specific energy content.

3. The turbo machine of claim 2, characterized in that a further controllable injector means (6) is disposed at the outlet (4) of the working machine (2).

4. The turbo machine of claim 3, characterized in that the two injector means (5, 6) are controlled in such a manner that the cross-section of the bypass means (9) is increased by the first injector means (5) when the cross-section of the output conduit (13) is decreased by the further injector means (6).

5. The turbo machine of claim 1, characterized in that the working part is a turbine (15), and the part of the total flow returned via the bypass means forms the flow component of the injector means (18) having the lower specific energy content.

6. The turbo machine of claim 5, characterized in that the working part is the turbine (15) of a turbosupercharger provided at a combustion engine, the adjusting member (19) being controlled in response to the operating point of the combustion engine.

7. The turbo machine of claim 5 or 6, characterized in that an adjustable throttle means (17b) is disposed in the output conduit (17a) of the turbine (15).

8. The turbo machine of claim 1, characterized in that the working part is a turbine (23) which is interconnected with a pump (22) to form a hydrodynamic transmission, and that the injector means (31) is disposed between the pump outlet (29) and the turbine inlet (8).

9. The turbo machine of any of claims 1 to 8, characterized in that blades (35) are provided in the bypass means (30).

10. The turbo machine of claim 9, characterized in that a throttle member (34) is disposed upstream of the blades (35) of the bypass means (30).

11. The turbo machine of claim 10, characterized in that the throttle member (34) includes an annular member concentric to the axis of rotation (26) of the working part (23).

12. The turbo machine of any of claims 1 to 11, characterized in that the adjusting member of the injector means (31) includes an annular member (32) concentric to the axis of rotation (26) of the working part (23).

13. The turbo machine of claim 11 or 12, characterized in that the annular member (32, 34) is axially movable by means of a helical guide (42).

14. The turbo machine of claim 13, characterized in that the helical guide (42) is disposed on a setting wheel (39) which is concentric to the axis of rotation (26) of the working part (23).

15. The turbo machine of any of claims 1 to 14, characterized in that the adjusting member (32) of the injector means (31) in one of its end positions blocks the bypass means (30) and upon movement away from this end position throttles the cross-section (33) penetrated by the flow component having a higher specific energy content.

16. The turbo machine of any of claims 8 to 15, characterized in that the bypass means (30) is formed by a member (35) which is fixed to the housing in the inner torus of the machine, supports (36) of said member extending through the flow passage and being provided with profiled elements (37) for reducing the flow resistence.

17. The turbo machine of claim 16, characterized in that the profiled elements (37) are adapted to rotate about the supports (36) and to be adjusted by the flow to their minimum flow resistance.

18. The turbo machine of any of claims 8 to 17, characterized in that the blades (53) of the turbine wheel (44) are shaped so that the fluid directed into the bypass means (47) applies a reaction torque to the turbine wheel acting in the direction of rotation thereof.

19. The turbo machine of any of claims 1 to 18, characterized in that an actuating member (35) is disposed in the flow, which is adjustable by the flow to move the adjusting member (32) of the injector means (31).

20. A method of controlling the turbo machine according to any of claims 8 to 19 and including a pump wheel and a turbine wheel, wherein a stall speed below the maximum speed of the pump drive is given for the unthrottled pump (22), characterized in that, for increasing the torque achievable at the turbine (23), the pump (22) is throttled thereby reducing the pump torque, the bypass means (30) is opened and the pump speed is increased.

21. A method of controlling the turbo machine according to any of claims 9 to 19 and including a pump wheel and a turbine wheel, wherein the turbine (23) is a centripetal turbine, characterized in that, for breaking at high turbine speeds, the pump outlet (29) is throttled so that the turbine (23) operates as a pump, the direction of flow is reversed and the fluid is urged through the blades (35) of the opened bypass means (30), wherein the breaking torque generated at the turbine is adapted to be controlled by the throttle position.

22. A method of controlling the turbo machine according to any of claims 8 to 19 and including a pump wheel and a turbine wheel, wherein the operating pump drive rotates at minimum speed, characterized in that, when the turbine (23) is at stand-still or rotates slowly and the torque generated at the turbine by the fluid flow is not required, the pump outlet (29) is closed completely or partially by the adjusting member (32) so that the pump torque and turbine torque are reduced.

**Revendications**

1. Machine fluidodynamique avec une partie active (2; 15; 23; 44; 54; 63), un dispositif d'injection (5; 18; 31; 50; 58; 70) placé en amont de l'admission de la partie active, un dispositif de dérivation (9; 20; 30; 47; 56; 66, 67) par l'intermédiaire duquel une partie de l'écoulement total passant par la partie active est amenée au dispositif d'injection, et un organe de réglage (7; 19; 32; 51; 72, 73, 74) pour la commande de l'une des deux composantes de l'écoulement total passant par la partie active, caractérisée en ce que le dispositif d'injection (5; 18; 31; 50; 58; 70) est disposé à l'endroit de la réunion des deux composantes d'écoulement, et que l'organe de réglage (7; 19; 32; 51; 72, 73, 74) est conformé en étranglement pour la modification de la section du dispositif d'injection traversée par la composante présentant le contenu énergétique spécifique le plus élevé.

2. Machine fluidodynamique selon la revendication 1, caractérisée en ce que la partie active est une machine de travail (2) et que la partie de l'écoulement total ramenée par le dispositif de dérivation constitue la première composante d'écoulement du dispositif d'injection (5) avec le contenu énergétique spécifique le plus élevé.

3. Machine fluidodynamique selon la revendication 2, caractérisée en ce qu'un dispositif d'injection supplémentaire commandable (6) est monté à la sortie (4) de la machine de travail (2).

4. Machine fluidodynamique selon la revendication 3, caractérisée en ce qu'elle comprend une commande des deux dispositifs d'injection (5, 6) qui agit de telle façon que la réduction de la section de la conduite de sortie (13) par le dispositif d'injection supplémentaire (6) entraîne l'augmentation de la section du dispositif de dérivation (9) par le premier dispositif d'injection (5).

5. Machine fluidodynamique selon la revendication 1, caractérisée en ce que la partie active est une turbine (15) et que la partie de l'écoulement total ramenée par l'intermédiaire du dispositif de dérivation constitue la composante d'écoulement du dispositif d'injection (18) avec le contenu énergétique spécifique le plus faible.

6. Machine fluidodynamique selon la revendication 5, caractérisée en ce que la partie active est la turbine (15) d'un turbocompresseur à suralimentation sur un moteur à combustion interne, l'organe de réglage (19) étant commandé en fonction du point de fonctionnement du moteur à combustion interne.

7. Machine fluidodynamique selon l'une des revendications 5 ou 6, caractérisée en ce que dans la conduite de sortie (17a) de la turbine (15) est monté un dispositif d'étranglement (17b) réglable.

8. Machine fluidodynamique selon la revendication 1, caractérisée en ce que la partie active est une turbine (23) qui est connectée avec une pompe (22) pour former une transmission hydrodynamique, et que le dispositif d'injection (31) est monté entre la sortie de la pompe (29) et l'admission de la turbine (28).

9. Machine fluidodynamique selon l'une quelconque des revendications 1 à 8, caractérisée en ce que des aubes (35) sont disposées dans le dispositif de dérivation (30).

10. Machine fluidodynamique selon la revendication 9, caractérisée en ce qu'un organe d'étranglement (34) est disposé en amont des aubes (35) du dispositif de dérivation (30).

11. Machine fluidodynamique selon la revendication 10, caractérisée en ce que l'organe d'étranglement (34) présente un élément annulaire disposé concentriquement à l'axe de rotation (26) de la partie active (23).

12. Machine fluidodynamique selon l'une quelconque des revendications 1 à 11, caractérisée en ce que l'organe de réglage du dispositif d'injection (31) présente un élément annulaire (32) disposé concentriquement à l'axe de rotation (26) de la partie active (23).

13. Machine fluidodynamique selon l'une des revendications 11 ou 12, caractérisée en ce que l'élément annulaire (32, 34) peut être déplacé axialement par l'intermédiaire d'un guidage à vis (42).

14. Machine fluidodynamique selon la revendication 13, caractérisée en ce que le guidage à vis (42) est monté sur une roue de réglage (30) disposée concentriquement par rapport à l'axe de rotation (26) de la partie active (23).

15. Machine fluidodynamique selon l'une quelconque des revendications 1 à 14, caractérisée en ce que l'organe de réglage (32) du dispositif d'injection (31) bloque, dans l'une de ses positions de fin de course, le dispositif de dérivation (30) et qu'il réduit la section (33) traversée par la composante d'écoulement présentant un contenu énergétique plus élevé lorsqu'il est déplacé à partir de cette position de fin de course.

16. Machine fluidodynamique selon l'une quelconque des revendications 8 à 15, caractérisée en ce que le dispositif de dérivation (30) est constitué par un élément (35) qui est solidaire du carter et disposé dans le tore intérieur de la machine et dont les supports (36) passant au travers du canal d'écoulement sont munis d'éléments profilés (37) qui diminuent la résistance hydraulique.

17. Machine fluidodynamique selon la revendication 16, caractérisée en ce que les éléments profilés (37) peuvent tourner autour des supports (36) et être réglés par le courant de façon à présenter une résistance hydraulique minimale.

18. Machine fluidodynamique selon l'une quelconque des revendications 8 à 17, caractérisée en ce que les aubes (53) de la roue de turbine (44) sont conformées de telle façon que le fluide dirigé dans le dispositif de dérivation (47) exerce sur la roue de turbine un moment de réaction agissant dans le sens de rotation de celle-ci.

19. Machine fluidodynamique selon l'une quelconque des revendications 1 à 18, caractérisée en ce que dans le courant est disposé un organe de manœuvre (75) pouvant être déplacé par ledit courant et déplaçant l'organe de réglage (32) dans le dispositif d'injection (31).

20. Procédé pour la commande de la machine fluidodynamique comprenant une roue de pompe et une roue de turbine selon l'une quelconque des revendications 8 à 19, une vitesse de freinage fixe inférieure à la vitesse de rotation maximale de l'entraînement de la pompe étant prédéterminée pour la pompe sans étranglement, caractérisée en ce que, pour augmenter le couple de rotation réalisable sur la turbine (23), le débit de la pompe (22) est réduit, ce qui a pour effet de diminuer le couple de rotation de la pompe, d'ouvrir le dispositif de dérivation (30) et d'augmenter la vitesse de rotation de la pompe.

21. Procédé pour la commande de la machine fluidodynamique comprenant une roue de pompe et une roue de turbine selon l'une quelconque des revendications 9 à 19, la turbine (23) étant une turbine centripète, caractérisé en ce que le freinage est obtenu, en cas de vitesses de rotation de la turbine trop élevées, par l'étranglement de la sortie de la pompe (29) de telle façon que la turbine (23) agit comme pompe en inversant la direction d'écoulement et en pressant le fluide à travers les aubes (35) du dispositif de dérivation (30) ouvert, le moment de freinage crée sur la turbine pouvant être commandé par la position de l'organe d'étranglement.

22. Procédé pour la commande de la machine fluidodynamique comprenant une roue de pompe et une roue de turbine selon l'une quelconque des revendications 8 à 19, l'entraînement de la pompe en marche tournant à une vitesse de rotation minimale, caractérisé en ce que, lorsque la turbine (23) est à l'arrêt ou tourne lentement et lorsque le couple de rotation produit par le courant de fluide sur la turbine, la sortie de la pompe (29) est obturée entièrement ou partiellement par l'organe de réglage (32) de sorte que les couples de rotation de la pompe et de la turbine baissent.

FIG.1

FIG.2

FIG.3

FIG.4

FIG.5

FIG. 6

FIG. 7

FIG. 8

FIG.9

FIG.10